(19) Europäisches Patentamt
European Patent Office
Office européen des brevets

(11) **EP 4 321 775 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **22189554.3**

(22) Anmeldetag: **09.08.2022**

(51) Internationale Patentklassifikation (IPC):
**F16H 55/08** (2006.01)

(52) Gemeinsame Patentklassifikation (CPC):
**F16H 55/082;** F16H 25/00; F16H 55/06; F16H 2055/065

(54) **ZAHNRAD MIT SCHRÄGVERZAHNUNG**

GEARED WHEEL WITH HELICAL GEARING

ROUE DENTÉE À DENTURE HÉLICOÏDALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.02.2024 Patentblatt 2024/07**

(73) Patentinhaber: **IMS Gear SE & Co. KGaA**
**78166 Donaueschingen (DE)**

(72) Erfinder:
• **SÜSS, Marius**
**78176 Blumberg (DE)**
• **BIRK, Sebastian**
**78647 Trossingen (DE)**
• **KNÖPFLE, Michael**
**78183 Hüfingen (DE)**
• **SCHACHTSCHNEIDER, paul**
**78054 Villingen-Schwenningen (DE)**
• **STOPPEL, Eugen**
**78357 Mühlingen (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
DE-A1- 102017 131 180    KR-B1- 101 849 042
US-A- 6 070 484    US-A1- 2022 090 669

**Beschreibung**

Die Erfindung betrifft ein Zahnrad, welches einstückig aus Kunststoff gebildet ist, und die Merkmale des Oberbegriffs des Anspruchs 1 aufweist, sowie ein Herstellungsverfahren hierfür.

Beispiele für aus Kunststoff hergestellte, einteilige Zahnräder sind aus DE 10 2017 201 383 A1, DE 200 22 502 U1, US2002/0029648 A1 sowie US 6,070,484 hinlänglich bekannt. Die Zahnräder verfügen über eine Außenverzahnung, welche um eine mittige Rotationsachse herum angeordnet ist. Mittig verfügt das Zahnrad über eine Aufnahmeöffnung zur Aufnahme einer Achse oder Welle, wobei ein Zwischenabschnitt diese Aufnahmeöffnung mit der Außenverzahnung einstückig verbindet. Diese bekannten Zahnräder weisen eine sogenannte Geradverzahnung auf, d.h., dass die Zähne der Außenverzahnung parallel zur Rotationsachse des Zahnrades ausgerichtet sind. Problematisch sind solche Geradverzahnungen hinsichtlich ihrer Laufruhe und der Geräuschentwicklung.

Darüber hinaus sind auch sogenannte Mehrkomponentenzahnräder bekannt, die aus unterschiedlichen Materialien, z.B. unterschiedlichen Kunststoffen, und Teilen zusammengesetzt sind.

Insbesondere bei Anwendungen in Hilfsantrieben von Kraftfahrzeugen, wie z.B. elektrische Lenkungen, elektrische Sitzverstellungen oder elektromechanischen Bremsen, kommen solche Zahnräder zunehmend in Einsatz. Dabei ist es unerlässlich, dass diese Zahnräder hohen Festigkeitsanforderungen entsprechen, aber gleichzeitig auch klein bauen.

Im Kraftfahrzeugbau allgemein, aber auch insbesondere bei der Realisierung von elektromechanischen Bremsen, elektrischen Lenkungen und elektrischen Sitzverstellungen, besteht das Bedürfnis, gewichtssparende und auch platzsparende Kraftfahrzeugkomponenten herzustellen. Daneben besteht aufgrund des zunehmenden Kostendrucks die Forderung, möglichst kostengünstig solche für die Fahrzeuge notwendigen Komponenten herzustellen.

Hier setzt die vorliegende Erfindung an.

Die Erfindung hat das Ziel die eingangs genannten, einstückigen und aus Kunststoff bestehenden Zahnräder, insbesondere für die Anwendung in einem Hilfsantrieb eines Kraftfahrzeuges, derart weiterzubilden, dass diese einen geringen Bauraum aufweist, kostengünstig herzustellen sind und zusätzlich die notwendigen Festigkeitserfordernisse erfüllen. Zusätzlich soll sich ein solches Zahnrad durch eine geringe Geräuschentwicklung und eine hohe Laufruhe auszeichnen.

Dieses Ziel wird für ein Zahnrad mit den Merkmalen des Anspruchs 1 gelöst.

Weiterbildungen eines solchen Zahnrades sind Gegenstand der Unteransprüche.

Das einstückige und aus Kunststoff gebildete Zahnrad nach der Erfindung weist demnach folgende Merkmale auf:

- einer Rotationsachse (R),

- einer um eine Rotationsachse angeordneten Außenverzahnung,

- einer zentrisch angeordneten Aufnahmeöffnung,

- einen zwischen der Außenverzahnung und der Aufnahmeöffnung angeordneten Zwischenabschnitt,

- einer im Zwischenabschnitt angeordneten Verstärkungsstruktur mit einer Vielzahl von Öffnungen und zwischen den Öffnungen liegenden Verstärkungsrippen ,

- die Außenverzahnung ist als eine Schrägverzahnung ausgebildet mit einem Schrägungswinkel W zur Rotationsachse,

- mindestens ein Teil der Öffnungen folgt mindestens annähernd dem Schrägungswinkel W der Schrägverzahnung mit einem Öffnungswinkel V.

Ein solches Zahnrad zeichnet sich dank der Schrägverzahnung der Außenverzahnung im Vergleich zu Zahnrädern mit Geradverzahnung durch eine höhere Laufruhe und eine geringere Geräuschentwicklung aus. Aufgrund der erfindungsgemäß ebenfalls schräg angeordneten Öffnungen und der damit schräg ausgebildeten Rippenstruktur im Zwischenabschnitt des Zahnrades verfügt das Zahnrad über eine hohe Festigkeit.

Obwohl es grundsätzlich möglich ist, ein solches Zahnrad beispielsweise durch 3D-Drucken derart herzustellen, dass der Öffnungswinkel V der Öffnungen genau oder zumindest ziemlich genau dem Schrägungswinkel W der Außenverzahnung entspricht, ist es in einer Weiterbildung der Erfindung vorgesehen, dass der Öffnungswinkel V kleiner oder etwas kleiner gewählt wird als der Schrägungswinkel W. Die Erfindung sieht dabei insbesondere vor, dass der Öffnungswinkel folgender Vorschrift genügt oder dieser mindestens annähernd folgt:

$$V = \arctan (\tan (W) \times (R)/(d0/2)),$$

wobei

d0/2 = halber Teilkreisdurchmesser der Außenverzahnung (10),
R = Abstand einer Mitte einer der Öffnungen (32; 33) zur Rotationsachse (R) ist.

Es hat sich für die Realisierung eines erfindungsgemäßen Zahnrades als zweckmäßig erwiesen, dass der Schrägungswinkel W größer als 0 und kleiner als 25 Grad, vorzugweise etwa 10 Grad bis 20 Grad und insbesondere annähernd etwa 15 Grad beträgt.

Eine derartige Gestaltung der Öffnungswinkel erlaubt es, das erfindungsgemäße Zahnrad auch durch ein Kunststoff-Spritzverfahren in einem Werkzeug herzustellen. Ein solches Werkzeug verfügt über eine Vielzahl von Stiften, welche an denjenigen Stellen der Werkzeugform platziert sind, die die späteren Öffnungen des Zahnrades bilden sollen. Ein solches Werkzeug wird beim Entformen nach dem Spritzvorgang des Zahnrades durch Drehung aus der fertig gespritzten Zahnradform herausgedreht.

Obwohl die Öffnungen grundsätzlich auch als Durchgangsöffnungen durch die gesamte axiale Länge des Zahnrades ragen können, sieht eine Ausbildungsform der Erfindung vor, dass die Öffnungen als sackförmige Öffnungen ausgebildet sind, also jeweils einen Boden aufweisen.

Die Öffnungen können in dem Zwischenabschnitt zwischen der Außenverzahnung und der zentrischen Aufnahmeöffnung auf einem Kreisring angeordnet sein. Es liegt jedoch auch im Rahmen der Erfindung, dass die Öffnungen auf zwei oder mehr unterschiedlichen Kreisringen angeordnet sind.

Zur Erhöhung der Festigkeit des Zahnrades ist zwischen zwei kreisförmig angeordneten Ringen von Öffnungen ein umlaufender Verstärkungsring vorgesehen.

Sofern die Öffnungen auf zwei oder mehr Kreisringen angeordnet sind, können die Öffnungen zueinander radial ausgerichtet oder zueinander radial versetzt angeordnet sein.

In einer anderen Weiterbildung der Erfindung ist vorgesehen, dass die Öffnungen so angeordnet sind, dass unter jedem Zahnfuß eines Zahnes der Außenverzahnung eine der Öffnungen angeordnet ist. Diese Öffnung reicht dann mindestens annähernd bis nahe an einen Fußkreis des jeweiligen Zahnes der Außenverzahnung heran. Dabei ist es auch möglich, dass die Öffnung über den Fußkreis in den jeweiligen Zahn hineinragt.

Es hat sich als zweckmäßig erwiesen, dass die Öffnungen im Querschnitt gesehen eine von einem Kreisring abweichende Form aufweisen und insbesondere oval oder annähernd dreieckförmig ausgebildet sind. Dabei können die Innenwandungen der Öffnungen in sich noch verdreht oder verdrillt ausgebildet sein. Dies erleichtert das Entformen eines Werkzeuges, wenn das Zahnrad durch Spritzgießen in einer Werkzeugform hergestellt wird.

Die Aufnahmeöffnung des Zahnrades ist mit einer geeigneten Struktur zur Aufnahme eine Nabe, einer Welle oder einer Spindel ausgestattet. Sofern die Aufnahmeöffnung eine Spindel aufnehmen soll, ist die Aufnahmeöffnung mit einer Spindelmutterverzahnung versehen, in die die Spindel eingedreht werden kann. Eine solche Spindel kann beispielsweise einen Betätigungskolben einer elektrischen Bremse beim Verdrehen des Zahnrades, das Bestandteil einer Getriebeanordnung einer elektrischen Bremse ist, betätigen.

In einer besonderen Ausführungsform der Erfindung ist das Zahnrad an einer seiner axialen Stirnseiten mit einem Fortsatz versehen zur Aufnahme eines Radial- und Axiallagers, wie zum Beispiel eines Kugellagers. Dabei kann der Fortsatz als umlaufender Ring mit einer Vielzahl von gleichmäßig verteilten und radial nach außen gerichteten Rippen gebildet sein, wobei ein Außendurchmesser des Fortsatzes kleiner als ein Außendurchmesser der Außenverzahnung ist. Das oben erwähnte Kugellager kann hier beispielsweise klemmend auf den Rippen aufgeschoben werden, sofern die Rippen einen Außendurchmesser aufweisen, der etwas größer gewählt ist als der Aufnahmering des Kugellagers.

Sofern das Zahnrad an einer axialen Stirnseite einen Fortsatz aufweist, empfiehlt es sich, zwischen dem Fortsatz und der axialen Stirnseite des Zahnrades eine umlaufende, konkave Vertiefung vorzusehen. Eine solche umlaufende, konkave Vertiefung mindert die Scherkräfte bei Belastung des Zahnrades.

In einer anderen Ausbildung der Erfindung sind die radial nach außen weisenden Stirnseiten der Zähne des Zahnrades in Achsrichtung des Zahnrades gesehen stufenförmig ausgebildet. Dabei kann die Außenverzahnung eine oder mehrere Stufen aufweisen. Eine solche Abstufung der außenliegenden Stirnseiten der Zähne, also des Zahnkopfes der Zähne, sorgt für eine Erhöhung des Tragbildes des Zahnrades.

Es hat sich als zweckmäßig erwiesen, den Zahnkopf mit zwei links und rechts von einem mittleren Abschnitt zurückspringenden Stufen zu versehen, so dass eine mittlere Stufe den größten radialen Abstand zur Rotationsachse hat und die beiden äußeren Stufen einen geringeren Radius aufweisen. Dabei können die äußeren Stufen des Zahnrades in Axialrichtung gesehen schmäler ausgebildet sein als die mittlere Stufe.

In einer Weiterbildung der Erfindung weisen die Zähne der Außenverzahnung in Axialrichtung gesehen einen randseitigen Verzahnungsabschnitt auf, welcher von der Schrägverzahnung mit dem Schrägungswinkel W in eine Geradverzahnung mit dem Schrägungswinkel 0 übergeht. Durch diese Maßnahme können Spannungen im Zahnfuß eines Zahnes der Außenverzahnung über einen größeren Bereich verteilt werden.

Ausführungsbeispiele von erfindungsgemäßen Zahnrädern werden nachfolgend im Zusammenhang mit mehreren Figuren näher erläutert. Es zeigen:

Figur 1 ein erstes Ausführungsbeispiel eines erfindungsgemäßen Zahnrades mit Blick auf eine vordere Stirnseite des Zahnrades,

Figur 2 eine Schnittansicht entlang der Schnittlinie A - A von Figur 1,

Figur 3 eine perspektivische Ansicht des Zahnrades von Figur 1 und Figur 2 mit Blick auf die vordere Stirnseite,

Figur 4 eine perspektivische Ansicht des Zahnrades von Figur 1 mit Blick von schräg hinten auf die hintere Stirnseite,

Figur 5 eine stirnseitige Draufsicht auf das Zahnrad von Figur 1 mit Blick auf die hintere Stirnseite,

Figur 6 eine Seitenansicht des Zahnrades von Figur 1 mit deutlich erkennbarem Fortsatz,

Figur 7 eine stirnseitige Draufsicht auf das Zahnrad gemäß Figur 1 mit einer Schnittlinie A - A, die tangential zum Teilkreis des Zahnrades gewählt ist,

Figur 8 eine Schnittansicht gemäß der Schnittlinie A - A von Figur 7,

Figur 9 eine ähnliche Ansicht wie in Figur 1, jedoch mit einer Schnittlinie A - A, welche entlang der Mitte einer auf einem äußeren Kreisring liegenden Öffnung des Zahnrades liegt,

Figur 10 eine zugehörige Schnittansicht von Figur 9,

Figur 11 eine Draufsicht auf ein zweites Ausführungsbeispiel eines Zahnrades auf die vordere Stirnseite ähnlich der Darstellung zu Figur 1, wobei die auf zwei Kreisringen angeordneten Öffnungen zueinander versetzt platziert sind, und

Figur 12 eine Detaildarstellung eines Zahnrades der Außenverzahnung im Bereich der Zahnflanken.

In den nachfolgenden Figuren bezeichnen, sofern nicht anders angegeben, gleiche Bezugszeichen jeweils gleiche Teile mit gleicher Bedeutung.

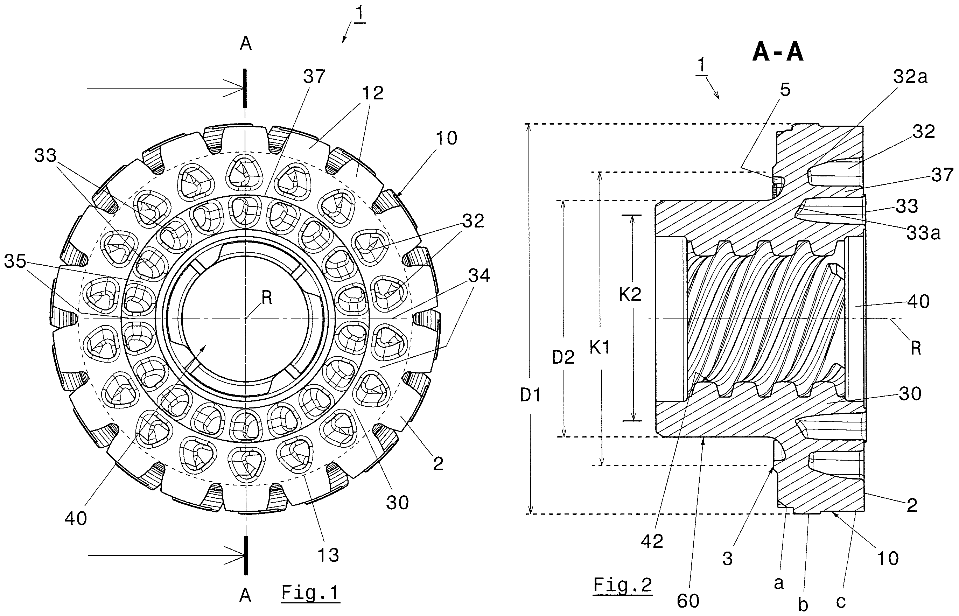

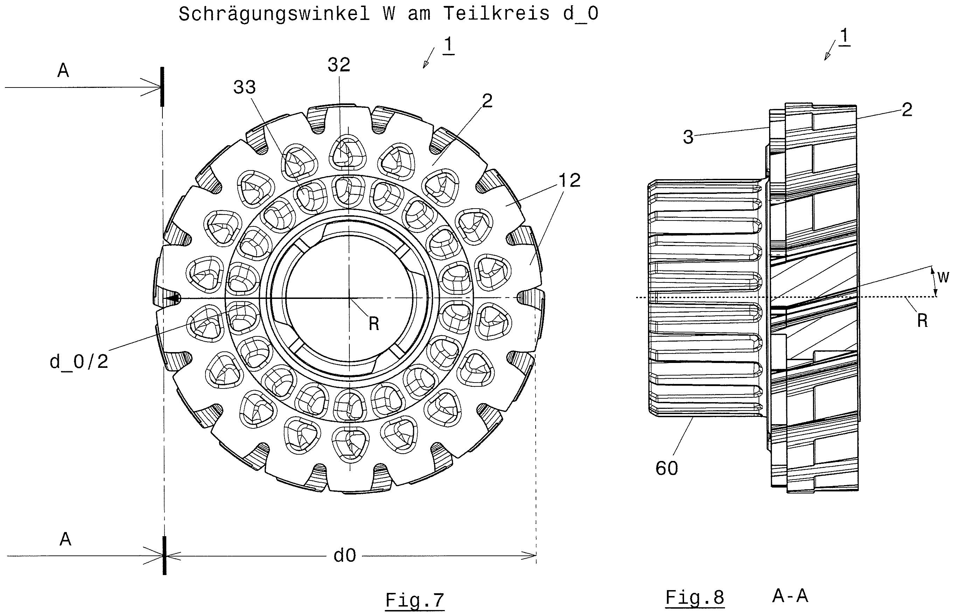

Figur 1 zeigt ein erstes Ausführungsbeispiel eines erfindungsgemäßen Zahnrades 1 mit Blick auf dessen erste axiale Stirnseite 2. Das Zahnrad 1 verfügt über eine Außenverzahnung 10 mit Zähnen 12, welche in einem Schrägungswinkel W schräg verzahnt sind. Dieser Schrägungswinkel W wird im Zusammenhang mit den Figuren 7 und 8 deutlich. In Figur 7 ist eine ähnliche Darstellung wie in Figur 1 dargestellt mit einem Schnitt entlang einer Schnittlinie A - A, die im Teilkreis der Außenverzahnung 10 des Zahnrades 1 genommen ist. Der zugehörige Schnitt A - A ist in Figur 8 gezeigt und der Schrägungswinkel W eingezeichnet. Dieser Schrägungswinkel W ist >0 und beträgt beispielsweise im dargestellten Ausführungsbeispiel von Figur 8 etwa annähernd 15°. Der Schrägungswinkel kann auch zwischen etwa >0 und < 25°, vorzugsweise zwischen etwa 10 und 20° liegen.

Zurückkommend auf Figur 1 weist das Zahnrad 1 eine mittige Rotationsachse R auf. Zentrisch zu dieser Rotationsachse R befindet sich eine Aufnahmeöffnung 40 zur Aufnahme einer Nabe, einer Welle oder dergleichen. Zwischen dieser Aufnahmeöffnung 40 und der Außenverzahnung 10 befindet sich ein Zwischenabschnitt 30 mit einer Vielzahl von Öffnungen 32, 33, welche auf zwei Kreisringen im Zwischenabschnitt 30 angeordnet sind. Zwischen den Öffnungen 32, 33, die als Sacköffnungen im vorliegenden Ausführungsbeispiel ausgebildet sind (vgl. hierzu Figur 2) befinden sich Verstärkungsrippen 34, 35 zur Erhöhung der Festigkeit des gesamten Zahnrades 1. Die Öffnungen sind vorliegend annähernd dreieckförmig im Querschnitt gesehen ausgebildet.

Die Außenverzahnung 10 des Zahnrades 1 verfügt über eine Vielzahl von umlaufenden Zähnen 12, die entsprechend der gewählten Schrägverzahnung zur Rotationsachse R schräg angeordnet sind. Wie aus Figur 1 ersichtlich, ragen die auf einem äußeren Kreisring im Zwischenabschnitt 30 befindlichen Öffnungen 32 bis nahe an einen Fußkreis 13 der Außenverzahnung 10 heran. Dabei sind die Öffnungen 32 ebenso wie die auf dem inneren Kreisring angeordneten Öffnungen 33 radial fluchtend zur Zahnmitte jedes Zahnes 12 der Außenverzahnung platziert.

Zwischen den kreisringförmig angeordneten Öffnungen 32, 33 befindet sich ein kreisringförmiger umlaufender Verstärkungsring 7.

Wie erwähnt, ist die Außenverzahnung 10 des Zahnrades 1 mit einer Schrägverzahnung ausgebildet. Mindestens ein Teil der Öffnungen 32, 33 folgt mindestens annähernd diesem Schrägungswinkel W der Schrägverzahnung und zwar mit einem Öffnungswinkel V, der später noch erläutert werden wird. Damit sind die Öffnungen und die Wandabschnitte der zugehörenden Öffnungen 32, 33 nicht parallel zur Rotationsachse R des Zahnrades 1 angeordnet, sondern schräg zu dieser, wobei die Wandungen zusätzlich noch in sich verdreht und verdrillt sein können.

Das gesamte in Figur 1 dargestellte Zahnrad 1 mit seiner Außenverzahnung 10 und dem Zwischenabschnitt 30 mit dem dort platzierten Öffnungen 32, 33 und den dazwischenliegenden Verstärkungsrippen 34 und dem Verstärkungsring 37 ist einstückig ausgebildet und aus Kunststoff hergestellt, insbesondere durch ein geeignetes Kunststoff-Spritzverfahren.

In der Schnittdarstellung von Figur 2 entlang der Schnittlinie A - A von Figur 1 ist eine an der Innenwandung der Aufnahmeöffnung 40 vorgesehene Spindelmutterverzahnung 42 zu erkennen. Die Spindelmutterverzahnung 42 dient zur Aufnahme einer Spindel, wie sie beispielsweise in elektrischen Bremsen zur Betätigung eines Betätigungskolbens eingedreht werden kann. Wie darüber hinaus aus Figur 2 ersichtlich, verfügt das Zahnrad 1 über eine erste axiale Stirnseite 2, die in Figur 2 rechts dargestellt ist, und eine zweite gegenüberliegende axiale Stirnseite 3, welche in Figur 2 links dargestellt ist. An dieser zweiten axialen Stirnseite 3 ragt ein Fortsatz 60 aus der zweiten axialen Stirnseite 3 hervor. Die Spindelmutterverzahnung 42 in der Öffnung 40 erstreckt sich im Inneren des Zahnrades 1 in diesen Fortsatz 60 hinein, so dass eine verlängerte Aufnahme für die in Figur 2 nicht dargestellte Spindel erreicht ist. Ein Außendurchmesser D2 des Fortsatzes 60 ist deutlich kleiner als ein Außendurchmesser D1 des Zahnrades 1.

Wie darüber hinaus zu erkennen ist, sind die auf einem äußeren Kreisring liegenden Öffnungen 32 auf einen Kreisring mit dem Durchmesser K1 und die auf dem inneren Kreisring angeordneten Öffnungen 33 auf einem inneren Kreisring mit dem kleineren Durchmesser K2 angeordnet. Die Öffnungen 32, 33 sind jeweils sackförmig ausgebildet und weisen jeweils Böden 32a, 33a auf.

Darüber hinaus zeigt Figur 2 deutlich, dass die radial nach außen weisenden Stirnseiten der Zähne 12 der Außenverzahnung 10 abgestuft ausgebildet sind und im vorliegenden Beispiel drei Stufenbereiche a, b, und c aufweisen. Dabei ist der mittlere Stufenbereich b derjenige mit dem größten Durchmesser D1. Links und rechts von diesem Stufenbereich b befindet sich die Stufenbereiche a und c, die etwas zum Stufenbereich b zurückversetzt sind. Schließlich ist in Figur 2 noch eine umlaufende, konkave Vertiefung 5 zwischen dem Fortsatz 60 und der zweiten axialen Stirnseite 3 zu erkennen. Diese umlaufende konkave Vertiefung 5 sorgt für eine Verminderung der Scherkräfte bei Belastung des Zahnrades 1.

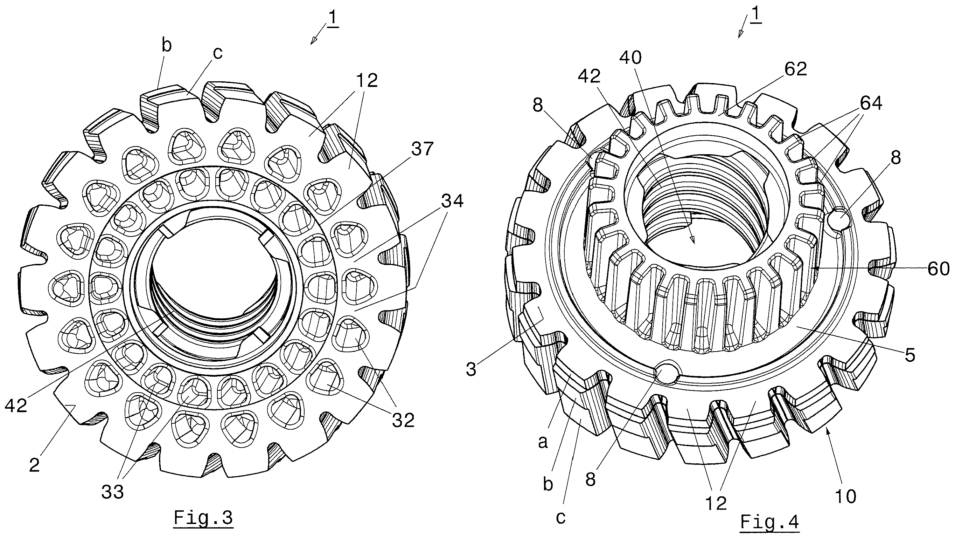

Die Figuren 3 und 4 zeigen das Zahnrad 1 in perspektivischer Ansicht mit Blick auf die erste Stirnseite 2 (Figur 3) bzw. mit Blick auf die zweite, also hintere axiale Stirnseite 3 des Zahnrades 1 (Figur 4). Die bereits bekannten Bezugszeichen werden für die im Zusammenhang mit Figur 1 und Figur 2 erläuterten Teile weiter verwendet. Wie insbesondere aus Figur 4 deutlich hervorgeht, sind in der umlaufenden, konkaven Vertiefung 5 drei um jeweils 120° um die Rotationsachse R herum versetzte Anspritzpunkte 8 vorgesehen, aus denen über die beim Herstellen des Zahnrades 1 das Kunststoffmaterial in die Werkzeugform zur Bildung des Zahnrades 1 gespritzt wird. Ebenfalls deutlich zu erkennen ist die Ausbildung des Fortsatzes 60 mit einem umlaufenden Ring 62, von dem sich radial nach außen eine Vielzahl von gleichmäßig verteilten und radial nach außen gerichteten Rippen 64 wegerstrecken.

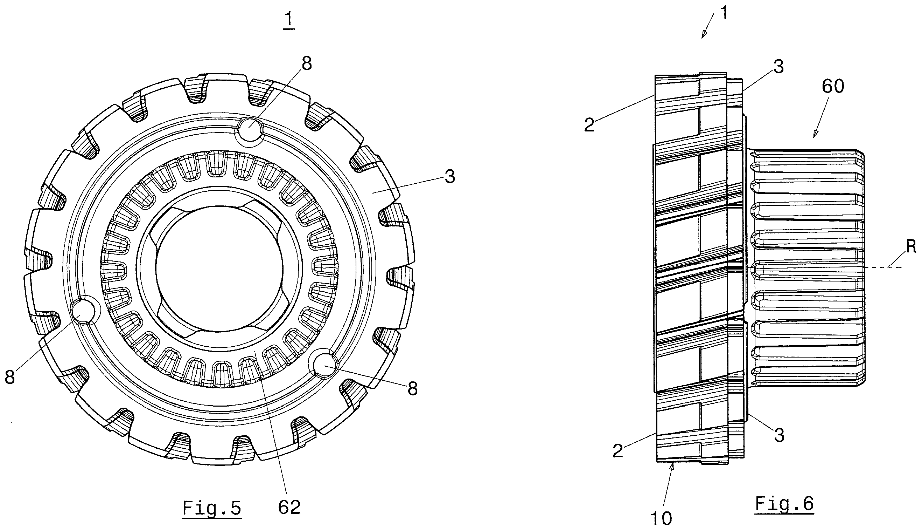

Figur 5 zeigt eine stirnseitige Draufsicht auf die zweite axiale Stirnseite 3 des Zahnrades 1. In Figur 6 ist die Draufsicht auf das um 90° gedrehte Zahnrad von Figur 5 dargestellt.

In den nachfolgenden Figuren 7 bis 12 wird erläutert, mit welchem Öffnungswinkel V die Öffnungen 32, 33 im Zahnrad 1 bezogen auf die Rotationsachse R und in Abhängigkeit des Schrägungswinkels W der Außenverzahnung 10 gemäß der vorliegenden Erfindung zu wählen ist.

Wie bereits erläutert, zeigt Figur 7 die stirnseitige Draufsicht auf die erste axiale Stirnseite 2 des Zahnrades 1. Figur 8 zeigt die zugehörige Schnittansicht entlang der Schnittlinie A - A von Figur 7. Dieser Schnitt A - A ist tangential an der Stelle des Zahnrades 1 geführt, an der sich der Teilkreis des dargestellten Zahnrades befindet. Der Teilkreis eines Zahnrades ist definiert durch die halbe Höhe eines Zahnes 12 des zugehörenden Zahnrades 1. Der gesamte Durchmesser des Teilkreises ist in Figur 7 mit d0 bezeichnet. Der zugehörende Radius d0/2 ist als Pfeil in Figur 7 eingezeichnet. Die Schnittlinie A - A schneidet tangential folglich eine Zahnlücke zwischen zwei Zähnen 12 auf halber Höhe der Zähne 12 bzw. der zugehörenden, dazwischenliegenden Zahnlücke. Genau an dieser Stelle ist der Schrägungswinkel W abzulesen, wie es in Figur 8 grafisch dargestellt ist. Der Schrägungswinkel W beträgt hier etwa 15° und ist zur Rotationachse R entgegen des Uhrzeigersinns gewählt. Dieser Schrägungswinkel W ist auch maßgebend für die schräge Anordnung der Öffnungen 32, 33 gemäß folgender Formel:

$$V = \arctan\left(\tan(W) \times (R)/(d0/2)\right),$$

wobei

d0/2 = halber Teilkreisdurchmesser der Außenverzahnung 10,

R = Abstand einer Mitte einer der Öffnungen 32; 33 zur Rotationsachse (R).

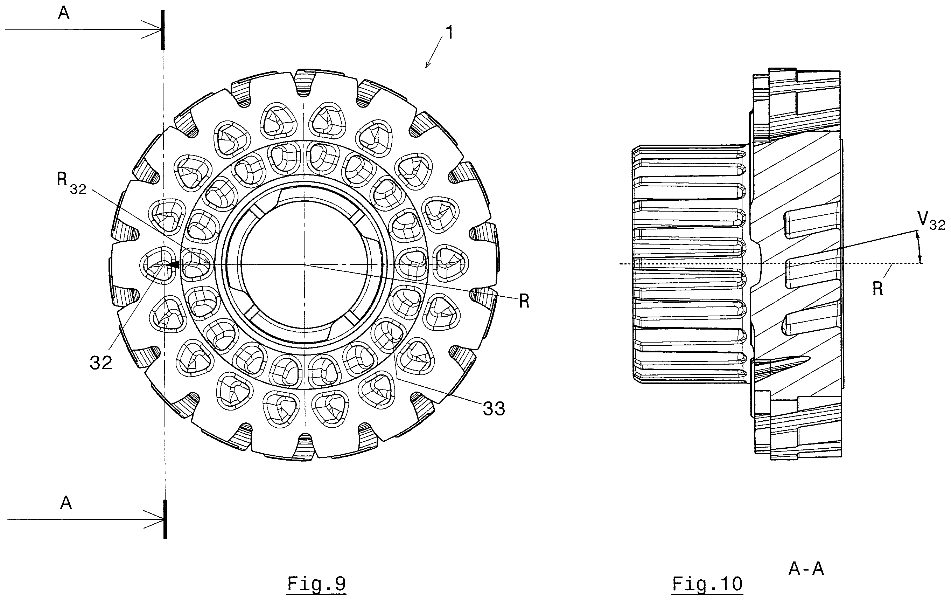

Im Zusammenhang mit den Figuren 9 bis 12 wird dies weiter näher erläutert.

Figur 9 zeigt eine ähnliche Darstellung wie in Figur 7, allerdings verläuft der Schnitt A - A jetzt tangential durch die Mitte einer der äußeren Öffnungen 32. Diese Mitte der Öffnung 32 hat einen Abstand zur Mitte der Rotationsachse R, welcher mit dem Bezugszeichen $R_{32}$ bezeichnet ist. Der sich hieraus ergebende Öffnungswinkel $V_{32}$ berechnet sich folgendermaßen für die Öffnung 32:

$$V_{32} = \text{arctan} \ (\text{tan} \ (W) \ x \ (R_{32} \ /d0/2),$$

wobei

W der Schrägungswinkel der Außenverzahnung 10 ist und d0/2 der halbe Teilkreisdurchmesser der Außenverzahnung 10 und $R_{32}$ entspricht dem Abstand der Mitte der Öffnung 32 zur Rotationsachse R.

Aus dieser Vorschrift ist deutlich zu erkennen, dass der Winkel $V_{32}$ etwas kleiner als der Schrägungswinkel W für die Öffnungen 32 ist.

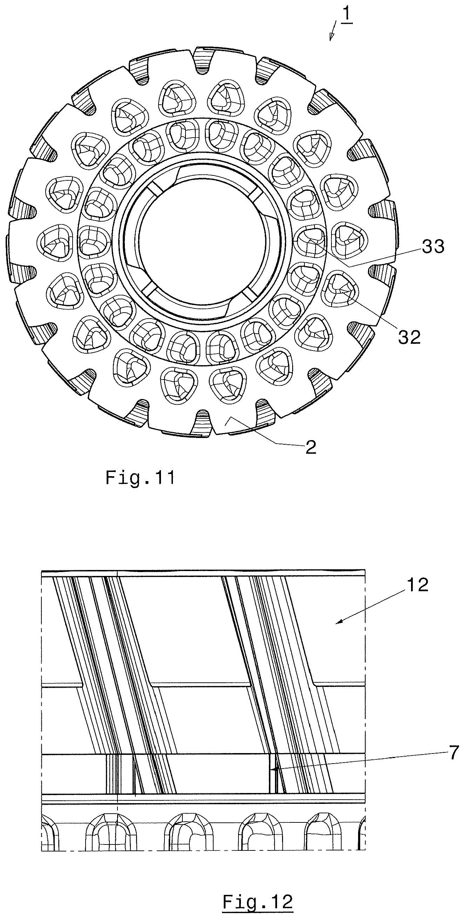

Legt man den Schnitt A - A in Figur 11 in die Mitte einer weiter innen liegenden Öffnung 33

errechnet sich der Öffnungswinkel $V_{33}$ wie folgt:

$$V_{33} = \text{arctan} \ (\text{tan} \ (W) \ x \ (R_{33} \ /(d0/2)).$$

Da der Radius $R_{33}$ kleiner als der zuvor diskutierte Radius $R_{32}$ und auch kleiner als der Schrägungswinkel W der Außenverzahnung 10 ist, ergibt sich für den Öffnungswinkel $V_{33}$ der auf einem inneren Kreisring liegenden Öffnungen 33 ein noch kleinerer Öffnungswinkel $V_{33}$.

$$V_{33} < V_{32} < W.$$

Wenngleich in den bisher erläuterten Figuren die Öffnungen 32, 33 radial fluchtend zu jeweils einem Zahn 12 der Außenverzahnung 10 angeordnet war, ist es auch möglich, die Öffnungen 33 versetzt zu den darüberliegenden Öffnungen 32 zu platzieren. Eine zugehörende Ansicht einer solchen Ausführungsform des Zahnrades 1 ist in Figur 11 in Draufsicht auf die erste axiale Stirnseite 2 eines Zahnrades 1 dargestellt.

Schließlich ist in Figur 12 eine Detaildarstellung des Zahnrades der Außenverzahnung 10 im Bereich der zugehörenden Zahnflanken dargestellt.

Eine Werkzeughälfte weist einen Schrägungswinkel auf. Die andere Seite ist unterteilt in eine Seite mit Schrägungswinkel und eine Seite mit einem senkrechten Winkel, um die Verzahnung gerade entformen zu können.

Bezugszeichenliste

1    Zahnrad
2    erste axiale Stirnseite
3    Zweite axiale Stirnseite
5    konkave Vertiefung
7    randseitiger Verzahnungsabschnitt
8    Anspritzpunkte

10    Außenverzahnung
12    Zahn
13    Fußkreis

30    Zwischenabschnitt
32    Öffnung
32a    Boden der Öffnung 32
33    Öffnung
33a    Boden der Öffnung 33
34    Verstärkungsrippen
35    Verstärkungsrippen

| | |
|---|---|
| 37 | Verstärkungsring |
| 40 | Aufnahmeöffnung |
| 42 | Spindelmutterverzahnung |
| 60 | Fortsatz |
| 62 | Ring |
| D1 | Außendurchmesser des Zahnrades 1 |
| D2 | Außendurchmesser des Fortsatzes 60 |
| R | Rotationsachse |
| W | Schrägungswinkel |
| V | Öffnungswinkel |
| K1 | äußerer Kreisring |
| K2 | innerer Kreisring |
| a | Stufenbereich |
| b | Stufenbereich |
| c | Stufenbereich |

**Patentansprüche**

1. Zahnrad (1), welches einstückig aus Kunststoff ausgebildet ist, mit

   - einer Rotationsachse (R),
   - einer um eine Rotationsachse angeordneten Außenverzahnung (10),
   - einer zentrisch angeordneten Aufnahmeöffnung (40),
   - einen zwischen der Außenverzahnung (10) und der Aufnahmeöffnung (40) angeordneten Zwischenabschnitt (30),
   - einer im Zwischenabschnitt (30) angeordneten Verstärkungsstruktur mit einer Vielzahl von Öffnungen (32, 33) und zwischen den Öffnungen liegenden Verstärkungsrippen (34, 35),

   **gekennzeichnet durch** folgende weiteren Merkmale:

   - die Außenverzahnung (10) ist als eine Schrägverzahnung ausgebildet mit einem Schrägungswinkel (W) zur Rotationsachse (R),
   - mindestens ein Teil der Öffnungen (32, 33) folgt mindestens annähernd dem Schrägungswinkel (W) der Schrägverzahnung mit einem Öffnungswinkel(V).

2. Zahnrad (1) nach Anspruch 1,
   **dadurch gekennzeichnet, dass** die Öffnungen (32, 33) sackförmig ausgebildet sind.

3. Zahnrad (1) nach Anspruch 1 oder 2,
   **dadurch gekennzeichnet, dass** die Öffnungen (32, 33) in zweireihig angeordneten Kreisen mit unterschiedlichen Kreisdurchmessern (K1, K2) um die Rotationsachse (R) herum angeordnet sind.

4. Zahnrad (1) nach Anspruch 3,
   **dadurch gekennzeichnet, dass** die Öffnungen (32, 33) auf den zwei Kreisen radial ausgerichtet untereinander angeordnet sind.

5. Zahnrad (1) nach Anspruch 3,
   **dadurch gekennzeichnet, dass** die Öffnungen (32, 33) auf den zwei Kreisen radial versetzt zueinander angeordnet sind.

6. Zahnrad (1) nach einem der vorherigen Ansprüche,
   **dadurch gekennzeichnet, dass** zwischen den beiden kreisförmig angeordneten Öffnungen (32, 33) ein Verstärkungsring (37) angeordnet ist.

7. Zahnrad (1) nach einem der vorherigen Ansprüche,

**dadurch gekennzeichnet, dass** unter jedem Zahnfuß eines Zahnes (12) der Außenverzahnung (10) eine Öffnung (32) angeordnet ist und diese Öffnung (32) bis mindestens annähernd an einen Fußkreis (13) des jeweiligen Zahnes (12) der Außenverzahnung (10) heranreicht oder über den Fußkreis (13) in den jeweiligen Zahn (12) hinausragt.

8. Zahnrad (1) nach einem der vorherigen Ansprüche,
   **dadurch gekennzeichnet, dass** die Öffnungen (32, 33) im Querschnitt gesehen eine von einem Kreisring abweichende Form aufweisen und insbesondere oval oder annähernd dreieckförmig ausgebildet sind.

9. Zahnrad (1) nach einem der vorherigen Ansprüche,
   **dadurch gekennzeichnet, dass** in der Aufnahmeöffnung (40) eine Spindelmutterverzahnung (42) angeordnet ist.

10. Zahnrad (1) nach einem der vorherigen Ansprüche,
    **dadurch gekennzeichnet, dass** das Zahnrad (1) an einer seiner axialen Seiten (2, 3) einen Fortsatz (60) aufweist zur Aufnahme eines Radial- und Axiallagers, insbesondere eines Kugellagers.

11. Zahnrad (1) nach Anspruch 10,
    **dadurch gekenzeichnet,** dass der Fortsatz (60) als umlaufender Ring (62) mit einer Vielzahl von gleichmäßig verteilten und radial nach außen gerichteten Rippen (64) gebildet ist, wobei ein Außendurchmesser (D2) des Fortsatzes (60) kleiner als ein Außendurchmesser (D1) der Außenverzahnung (10) ist.

12. Zahnrad (1) nach Anspruch 10 oder 11,
    **dadurch gekennzeichnet, dass** zwischen dem Fortsatz (60) und einer zugewandten axialen Seite (3) des Zahnrades (1) eine umlaufende, konkave Vertiefung (5) vorgesehen ist.

13. Zahnrad (1) nach einem der vorherigen Ansprüche,
    **dadurch gekennzeichnet, dass** radial nach außen weisende Stirnseiten der Zähne (12) des Zahnrades (10) in Achsrichtung des Zahnrades (1) gesehen mindestens eine, vorzugsweise mehrere Stufen (a, b, c), aufweisen.

14. Zahnrad (1) nach Anspruch 13,
    **dadurch gekennzeichnet, dass** die Zähne (12) drei Stufenbereiche (a, b, c) aufweisen, wobei ein mittlerer Stufenbereich (b) einen radial größeren Abstand zur Rotationsachse (R) hat als die äußeren Stufenbereiche (a, c).

15. Zahnrad (1) nach Anspruch einem der vorherigen Ansprüche, **dadurch gekennzeichnet, dass** die Zähne (12) der Außenverzahnung (10) in Axialrichtung gesehen eine randseitigen Verzahnungsabschnitt (7) aufweisen, welcher von der Schrägverzahnung mit dem Schrägungswinkel (W) in eine Geradverzahnung mit dem Schrägungswinkel 0 übergeht.

16. Zahnrad (1) nach einem der vorherigen Ansprüche,
    **dadurch gekennzeichnet, dass** der Schrägungswinkel (W) größer als 0 und kleiner etwa 25 Grad, vorzugsweise etwa 10° bis 20° und insbesondere etwa annähernd 15° beträgt.

17. Zahnrad (1) nach einem der vorherigen Ansprüche,
    **dadurch gekennzeichnet, dass** der Öffnungswinkel (V) kleiner als der Schrägungswinkel (W) ist.

18. Zahnrad (1) nach einem der vorherigen Ansprüche,
    **dadurch gekennzeichnet, dass** der Öffnungswinkel (V) gemäß folgender Formel ausgebildet ist:

$$V = \arctan(\tan(W) \times (R)/(d0/2)),$$

wobei

    d0/2 = halber Teilkreisdurchmesser der Außenverzahnung (10),
    R = Abstand einer Mitte einer der Öffnungen (32; 33) zur Rotationsachse (R).

19. Verfahren zum Herstellen eines Zahnrades nach einem der vorherigen Ansprüche, bei welchen eine Werkzeugform mit einem Einleger zur Bildung der Öffnungen (32, 33) bereitgestellt wird, anschließend ein Spritzvorgang mit Kunststoff durchgeführt wird, und der Einleger beim Entformen des Zahnrades (1) durch gleichseitiges Verdrehen aus dem fertig spritzgegossenen Zahnrad (32, 33) bewegt wird.

**Claims**

1. Gear wheel (1) which is formed integrally from plastics material, comprising

   - an axis of rotation (R),
   - an external toothing (10) arranged around an axis of rotation,
   - a centrally arranged receiving opening (40),
   - an intermediate portion (30) arranged between the external toothing (10) and the receiving opening (40),
   - a reinforcing structure which is arranged in the intermediate portion (30) and has a plurality of openings (32, 33) and reinforcing ribs (34, 35) located between the openings,

   **characterised by** the following further features:

   - the external toothing (10) is configured as a helical gearing having a helix angle (W) relative to the axis of rotation (R),
   - at least some of the openings (32, 33) at least approximately follow the helix angle (W) of the helical gearing with an opening angle (V).

2. Gear wheel (1) according to claim 1,
   **characterised in that** the openings (32, 33) are configured in a sack-like manner.

3. Gear wheel (1) according to either claim 1 or claim 2,
   **characterised in that** the openings (32, 33) are arranged around the axis of rotation (R) in circles that are arranged in two rows and have different circle diameters (K1, K2).

4. Gear wheel (1) according to claim 3,
   **characterised in that** the openings (32, 33) are arranged on the two circles in a manner radially oriented relative to one another.

5. Gear wheel (1) according to claim 3,
   **characterised in that** the openings (32, 33) are arranged on the two circles in a manner radially offset relative to one another.

6. Gear wheel (1) according to any one of the preceding claims,
   **characterised in that** a reinforcing ring (37) is arranged between the two circularly arranged openings (32, 33).

7. Gear wheel (1) according to any one of the preceding claims,
   **characterised in that** an opening (32) is arranged under each tooth base of a tooth (12) of the external toothing (10), and said opening (32) reaches at least approximately as far as a base circle (13) of the respective tooth (12) of the external toothing (10) or protrudes beyond the base circle (13) into the respective tooth (12).

8. Gear wheel (1) according to any one of the preceding claims,
   **characterised in that** the openings (32, 33), viewed in cross-section, are of a chape that deviates from an annulus and are in particular oval or approximately triangular.

9. Gear wheel (1) according to any one of the preceding claims,
   **characterised in that** a spindle nut gearing (42) is arranged in the receiving opening (40).

10. Gear wheel (1) according to any one of the preceding claims,
    **characterised in that** the gear wheel (1) comprises an extension (60) on one of its axial sides (2, 3) for receiving a radial and axial bearing, in particular a ball bearing.

11. Gear wheel (1) according to claim 10,
    **characterised in that** the extension (60) is formed as a peripheral ring (62) having a plurality of uniformly distributed and radially outwardly oriented ribs (64), wherein an outside diameter (D2) of the extension (60) is smaller than an outside diameter (D1) of the external toothing (10).

12. Gear wheel (1) according to either claim 10 or claim 11, **characterised in that** a peripheral, concave depression (5) is provided between the extension (60) and a facing axial side (3) of the gear wheel (1).

13. Gear wheel (1) according to any one of the preceding claims,
**characterised in that** radially outwardly facing end faces of the teeth (12) of the gear wheel (10) comprise at least one, preferably a plurality of, steps (a, b, c), viewed in the axial direction of the gear wheel.

14. Gear wheel (1) according to claim 13,
**characterised in that** the teeth (12) comprise three step regions (a, b, c), wherein a central step region (b) is at a radially larger spacing from the axis of rotation (R) than the outer step regions (a, c).

15. Gear wheel (1) according to any one of the preceding claims,
**characterised in that** the teeth (12) of the external toothing (10) comprise an edge-side toothing portion (7), viewed in the axial direction, which transitions from the helical gearing having the helix angle (W) into straight toothing having the helix angle 0.

16. Gear wheel (1) according to any one of the preceding claims,
**characterised in that** the helix angle (W) is greater than 0 and smaller than approximately 25 degrees, preferably approximately 10° to 20°, and in particular around approximately 15°.

17. Gear wheel (1) according to any one of the preceding claims,
**characterised in that** the opening angle (V) is smaller than the helix angle (W).

18. Gear wheel (1) according to any one of the preceding claims,
**characterised in that** the opening angle (V) is formed according to the following formula:

$$V = arctan (tan (W) \times (R) / (d0/2)),$$

wherein

d0/2 = half the pitch circle diameter of the external toothing (10),
R = spacing of a centre of one of the openings (32; 33) from the axis of rotation (R).

19. Method for producing a gear wheel according to any one of the preceding claims, in which a tool mould having an inlay for forming the openings (32, 33) is provided, subsequently an injection process is carried out using plastics material, and the inlay is moved out of the finished injection-moulded gear wheel (32, 33) when demoulding the gear wheel (1) by simultaneous twisting.

**Revendications**

1. Roue (1) dentée, qui est en une matière plastique d'un seul tenant, comprenant

- un axe (R) de rotation,
- une denture (10) extérieure disposée autour de l'axe de rotation,
- une ouverture (40) de réception disposée de manière centrée,
- une partie (30) intermédiaire disposée entre la denture (10) extérieure et l'ouverture (40) de réception,
- une structure de renfort disposée dans la partie (30) intermédiaire et ayant une pluralité d'ouvertures (32, 33) et des nervures (34, 35) entre les ouvertures,

**caractérisée par** les autres caractéristiques suivantes :

- la denture (10) extérieure est constituée sous la forme d'une denture oblique faisant un angle (W) d'hélice avec l'axe (R) de rotation,
- au moins une partie des ouvertures (32, 33) suit au moins à peu près l'angle (W) d'hélice de la denture oblique avec un angle (V) d'ouverture.

2. Roue (1) dentée suivant la revendication 1,
**caractérisée en ce que** les ouvertures (32, 33) sont borgnes.

3. Roue (1) dentée suivant la revendication 1 ou 2,
**caractérisée en ce que** les ouvertures (32, 33) sont disposées autour de l'axe (R) de rotation en des cercles en deux rangées de diamètres (K1, K2) de cercle différents.

4. Roue (1) dentée suivant la revendication 3,
**caractérisée en ce que** les ouvertures (32, 33) sont disposées entre elles en étant dirigées radialement sur les deux cercles.

5. Roue (1) dentée suivant la revendication 3,
**caractérisée en ce que** les ouvertures (32, 33) sont disposées les unes par rapport aux autres en étant décalées radialement sur les deux cercles.

6. Roue (1) dentée suivant l'une des revendications précédentes,
**caractérisée en ce qu'**une bague (37) de renfort est disposée entre les deux ouvertures (32, 33) disposées en forme de cercle.

7. Roue (1) dentée suivant l'une des revendications précédentes,
**caractérisée en ce qu'**une ouverture (32) est disposée en-dessous de chaque pied d'une dent (12) de la denture (10) extérieure et cette ouverture (32) va au moins jusqu'à peu près un cercle (13) de pied de la dent (12) respective de la denture (10) extérieure ou pénètre en passant par le cercle (13) de pied dans la dent (12) respective.

8. Roue (1) dentée suivant l'une des revendications précédentes,
**caractérisée en ce que** les ouvertures (32, 33) ont, considéré en section transversale, une forme s'écartant d'un anneau circulaire et sont, en particulier de constitution ovale ou à peu près triangulaire.

9. Roue (1) dentée suivant l'une des revendications précédentes,
**caractérisée en ce qu'**une denture (42) d'écrou de vis est disposée dans l'ouverture (40) de réception.

10. Roue (1) dentée suivant l'une des revendications précédentes,
**caractérisée en ce que** la roue (1) dentée a, sur l'un de ses côtés (2, 3) axiaux, un prolongement (60) de réception d'un palier radial et axial, en particulier d'un roulement à bille.

11. Roue (1) dentée suivant la revendication 10,
**caractérisée en ce que** le prolongement (60) est sous la forme d'un anneau (62) faisant le tour ayant une pluralité de nervures (64) réparties uniformément et dirigées vers l'extérieur radialement, dans laquelle un diamètre (D2) du prolongement (60) est plus petit qu'un diamètre (D1) extérieur de la denture (10) extérieure.

12. Roue (1) dentée suivant la revendication 10 ou 11,
**caractérisée en ce qu'**une cavité (5) concave faisant le tour est prévue entre le prolongement (60) et un côté (3) axial tourné vers lui de la roue (1) dentée.

13. Roue (1) dentée suivant l'une des revendications précédentes,
**caractérisée en ce que** des côtés frontaux tournés vers l'extérieur radialement des dents (12) de la roue (10) dentée ont, considéré dans la direction axiale de la roue (1) dentée, plusieurs épaulements (a, b, c).

14. Roue (1) dentée suivant la revendication 13,
**caractérisée en ce que** les dents (12) ont trois parties (a, b, c) d'épaulement, dans laquelle une partie (b) d'épaulement médiane a une distance radiale à l'axe (R) de rotation plus grande que les parties (a, c) d'épaulement extérieures.

15. Roue (1) dentée suivant l'une des revendications précédentes,
**caractérisée en ce que** les dents (12) de la denture (10) extérieure ont, considéré dans la direction axiale, une partie (7) de denture du côté du bord, qui se transforme de la denture oblique ayant l'angle (W) d'hélice en une denture droite ayant l'angle d'hélice.

**16.** Roue (1) dentée suivant l'une des revendications précédentes,
**caractérisée en ce que** l'angle (W) d'hélice est plus grand que 0 et plus petit qu'environ 25 degré en étant, de préférence d'environ 10° à 20° et en étant, en particulier environ d'à peu près 15°.

**17.** Roue (1) dentée suivant l'une des revendications précédentes,
**caractérisée en ce que** l'angle (V) d'ouverture est plus petit que l'angle (W) d'hélice.

**18.** Roue (1) dentée suivant l'une des revendications précédentes,
**caractérisée en ce que** l'angle (V) d'ouverture est donné par la formule suivante :

$$V = \text{arctan}\ (\tan\ (W)\ \text{x}\ (R)\ /\ (d0/2)),$$

dans laquelle

d0/2 = demi diamètre partiel de la denture (10) extérieure,
R = distance d'un milieu de l'une des ouvertures (32 ; 33) à l'axe (R) de rotation.

**19.** Procédé de fabrication d'une roue dentée suivant l'une des revendications précédentes, dans lequel on se procure un moule d'outil ayant un introducteur pour la formation des ouvertures (32, 33), on effectue ensuite une opération de pulvérisation de matière plastique, et on retire l'introducteur de la roue (32, 33) dentée finie de coulée par pulvérisation par rotation simultanée lors du démoulage de la roue (1) dentée.

A-A

33

37

12

10

35

32

34

2

40

30

13

R

1

A

A

Fig.1

1

5

32a

32

37

33

33a

40

R

30

2

10

K2

K1

D2

D1

42

60

3

a

b

c

Fig.2

EP 4 321 775 B1

13

Fig.4

Fig.3

1

8

8

8

3

62

Fig.5

1

2

3

60

2

3

R

10

Fig.6

EP 4 321 775 B1

Schrägungswinkel W am Teilkreis d_0

Fig.7

Fig.8    A-A

Fig.9

Fig.10          A-A

33

32

2

Fig.11

12

7

Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017201383 A1
- DE 20022502 U1
- US 20020029648 A1
- US 6070484 A